# EUROPÄISCHE PATENTANMELDUNG

(11) **EP 1 118 500 A1**
(43) Veröffentlichungstag der Anmeldung: **25.07.2001**
(21) Anmeldenummer: 00101307.7
(22) Anmeldetag: 22.01.2000
(51) Int. Cl.: B60P 1/44

(54) **Ladebordwandsystem**

(71) Anmelder: Sörensen Hydraulik Zweigniederlassung, Ulfborg, Filial af Sörensen Hydraulik GmbH, Tyskland, 6990 Ulfborg (DK)
(72) Erfinder: Jensen, Jens Herman, 6990 Ulfborg (DK)
(74) Vertreter: Niedmers, Ole, Dipl.-Phys.

(57) **Zusammenfassung**

Es wird ein Ladebordwandsystem (10) zur Befestigung an Fahrzeugen (11), insbesondere Lastkraftfahrzeugen, vorgeschlagen, umfassend ein Hubtragwerk (12), eine im wesentlichen plattenförmige Ladebordwand (15) zum Heben und Absenken einer Last und wenigstens eine Hubaktuatoreinrichtung (16) zum Heben und Senken der Ladebordwand. Dabei ist die Ladebordwand (15) in angehobener Stellung lösbar verriegelbar (22).

## Beschreibung

Die Erfindung betrifft ein Ladebordwandsystem zur Befestigung an Fahrzeugen, insbesondere Lastkraftfahrzeugen, umfassend ein Hubtragwerk, eine im wesentlichen plattenförmige Ladebordwand zum Heben und Absenken einer Last und wenigstens eine Hubaktuatoreinrichtung zum Heben und Senken der Ladebordwand.

Ein Ladebordwandsystem dieser Art ist beispielsweise in der EP-A-0 808 747 beschrieben. Ladebordwandsysteme sind in unterschiedlichstem Aufbau seit langem bekannt und finden insbesondere Anwendung bei Lastkraftfahrzeugen, um mit dem Lastkraftfahrzeug zu transportierende Lasten am Einsatzort von der Ladeplattform des Lastkraftfahrzeuges auf die Fahrbahn, auf dem das Lastkraftfahrzeug steht, absenken zu können, so daß die Last dann anderweitig zum Bestimmungsort verbracht werden kann. Das gleiche gilt für den Beladungsvorgang eines Kraftfahrzeugs, d.h. die Last wird auf die sich auf der Fahrzeugebene befindende Ladebordwand aufgebracht, die Ladebordwand wird auf die Höhe der Ladeplattform des Lastkraftfahrzeugs angehoben und nachfolgend auf die Ladeplattform verbracht.

Bei einigen Konstruktionen des Ladebordwandsystems wird die Ladebordwand, wenn der Entlade- bzw. Beladevorgang beendet ist, aus der Horizontalen, in der sie sich zum Be- und Entladen befand, in die Vertikale verschwenkt, so daß die Ladeplattform zusätzlich als rückwertiger Abschluß der Ladefläche bzw. eines kofferartig ausgestalteten Laderaums dienen kann.

Bei anderen Ausgestaltungen bekannter Ladebordwandsysteme, sogenannter Faltladebordwände, findet kein Verschwenken der Ladebordwand aus der Horizontalen in die Vertikale und umgekehrt statt, vielmehr werden diese nach Abschluß des Be- bzw. Entladevorganges in zusammengeklappter oder gefalteter Form unter die Ladefläche bzw. den hinteren Bereich der Ladefläche eines Lastkraftfahrzeugs geklappt.

Für das Heben und Senken der Ladebordwand in im wesentlichen horizontaler Ausrichtung für das Be- und Entladen von der Ebene der Ladefläche eines Lastkraftfahrzeuges auf den Straßenuntergrund und vom Straßenuntergrund auf die Ebene der Ladefläche wird eine sogenannte Hubaktuatoreinrichtung verwendet, die hydraulisch, pneumatisch, elektrisch oder auf andere geeignete Weise betrieben wird. Für das Verschwenken der Ladebordwand, falls eine solche Möglichkeit vorhanden ist, d.h. für das Öffnen und Schließen des eigentlichen Laderaums aus der Horizontalen in die Vertikale und umgekehrt, wird eine hydraulische, pneumatische, elektrische oder auf andere geeignete Weise betriebene Klappaktuatoreinrichtung verwendet. Ladebordwandsysteme der vorbeschriebenen bekannten Art weisen somit wenigstens zwei Aktuatoreinrichtungen auf, wobei regelmäßig die Hubaktuatoreinrichtung mit dem einen Tragwerk eines regelmäßig aber nicht zwingend parallelogrammförmig ausgebildeten Hub- und Klapptragwerk zusammenwirkt, wohingegen die Klappaktuatoreinrichtung mit dem anderen Tragwerk des Hub- und Klapptragwerks zusammenwirkt. Eine Klappaktuatoreinrichtung ist aber, wie gesagt, nur dann vorgesehen, wenn tatsächlich eine Klappbewegung der Ladebordwand von der Horizontalen in die Vertikale und umgekehrt nötig ist.

Es ist bekannt, daß beispielsweise bei einem Be- und Entladevorgang auf die Ebene der Ladefläche der angehobenen Ladebordwand, die in diesem Falle quasi auch eine Ladeflächeverlängerung darstellt, sehr große Lasten durch das darauf zu postierende bzw. postierte Ladegut einwirken, aber auch dadurch, daß beispielsweise Gabelstapler, die entweder vom Lastkraftfahrzeug mitgeführt werden oder am Bestimmungsort zur Handhabung des Ladeguts eingesetzte Gabelstapler sind, wenigstens teilweise auch auf die Ebene der Ladefläche angehobene Ladebordwand fahren und somit nicht nur mit ihrem eigenen Gewicht die Ladebordwand bzw. das Ladebordwandsystem insgesamt belasten, sondern auch zusätzlich mit der Last, die sie handhaben müssen.

Es sind sogar Ladevorgänge möglich, bei denen die Ladebordwand sich in angehobener Stellung befindet und an eine Rampe eines Lagerhauses anschließt, d.h., daß die Gabelstapler mit den Gütern über die Ladebordwand auf die Ladefläche des Lastkraftfahrzeuges fahren und sie dort absetzen.

Es ist leicht vorstellbar, daß auf das Ladebordwandsystem, wie schon erwähnt, bei diesen Be- bzw. Entladevorgängen erhebliche Belastungen einwirken und zwangsläufig diese auch einem erheblichen Verschleiß unterzogen werden. Auch unter Sicherheitsgesichtspunkten sind derartige Belastungen der Ladebordwandsysteme in hohem Maße problematisch, da schon ein teilweises Funktionloswerden einzelner Elemente des Ladebordwandsystems zu fatalen Folgen für die die Verladearbeiten ausführenden Menschen einerseits und für das zuhandhabende Ladegut andererseits führen und schließlich auch zu einer weitergehenden Zerstörung des Ladebordwandsystems schlechthin führen können.

Es ist deshalb Aufgabe der vorliegenden Erfindung, ein Ladebordwandsystem der eingangs genannten Art zu schaffen, das auch bei höchsten Belastungen, d.h. in vertikal angehobener Stellung der Ladebordwand in dieser Position sicher gehalten wird, bei dem das bzw. die Tragwerke des Ladebordwandsystems und die Hubaktuatoreinrichtung, gegebenenfalls auch eine Klappaktuatoreinrichtung, weitgehend auch bei höchster Belastung, kräftemäßig entlastet ist, das einfach aufgebaut ist, einfach hergestellt werden kann und kostengünstig bereitstellbar ist, und das ein Handhaben von Lasten auf der Ladebordwand auch bei höchster Belastung gewährleistet und einen Verschleiß der Elemente des Ladebordwandsystems zumindest weitgehend ausschließt.

Gelöst wird die Aufgabe gemäß der Erfindung dadurch, daß die Ladebordwand in angehobener Stellung lösbar verriegelbar ist.

Der Vorteil der erfindungsgemäßen Lösung besteht im wesentlichen darin, daß beim Ladebordwandsystem Mittel vorhanden sind, mit denen die Ladebordwand in vertikaler Ausrichtung und angehobener Stellung ver- bzw. dann, wenn die Ladebordwand wieder abgesenkt werden soll, entriegelbar ist, so daß während des Be- bzw. Entladevorgangs in angehobener Stellung der Ladebordwand auch ein Befahren der Ladebordwand mit Gabelstaplern oder sonstigen ähnlichen Einrichtungen zur Handhabung des Ladeguts möglich ist. Die erfindungsgemäße Lösung gestattet zudem die Verwendung bisheriger Ladebordwände, d.h. auch bisherige Ladebordwände können nachträglich mit dem erfindungsgemäßen Ladebordwandsystem nachgerüstet werden und auch neu herzustellende Ladebordwandsysteme bedürfen keiner Änderung ihrer bisherigen Konstruktion. Dadurch ist ebenfalls die geforderte kostengünstige Bereitstellbarkeit bzw. Herstellbarkeit erfindungsgemäß in vollem Umfang gewährleistet.

Bei einer vorteilhaften Ausgestaltung des Ladebordwandsystems ist ein Klapptragwerk sowie wenigstens eine Klappaktuatoreinrichtung zum Verschwenken der Ladebordwand von der Horizontalen in die Vertikale und umgekehrt vorgesehen, wobei die Ladebordwand in vertikaler Stellung lösbar verriegelbar ist. Wie eingangs erwähnt, sind auch Ladebordwandsysteme bekannt, bei denen die Ladebordwand nicht nur zum Anheben einer Last von einem Straßenuntergrund auf die Ebene der Ladefläche eines Lastkraftfahrzeugs und umgekehrt verwendet wird, sondern auch für das Öffnen und Verschließen des eigentlichen Laderaumes. Auch für den sicheren Sitz der Ladebordwand in vertikaler Stellung dient die vorbeschriebene vorteilhafte Ausgestaltung des Ladebordwandsystems.

Bei einer Grundversion des erfindungsgemäßen Ladebordwandsystems ist vorteilhafterweise wenigstens ein Verriegelungsmittel vorgesehen. Es ist natürlich aber auch möglich, zwei oder eine beliebige Vielzahl von Verriegelungsmitteln vorzusehen, wenn beispielsweise sehr hohen zu erwartenden Belastungen der Ladebordwand bzw. des Ladebordwandsystems von vornherein Rechnung getragen werden soll.

Das Verriegelungsmittel selbst kann an sich auf beliebige geeignete Weise ausgestaltet sein. Vorteilhaft ist es aber, daß das Verriegelungsmittel einen am Fahrzeug befestigten stiftartigen Verriegelungsbolzen umfaßt, der im angehobenen und/oder vertikal verschwenkten Zustand der Ladebordwand mit einem an der Ladebordwand ausgebildeten Gegenlager in bzw. außer Eingriff kommt.

Ein stiftartiger Verriegelungsbolzen gestattet zudem eine einfache Ausführung der Führung bzw. des Lagers, in dem der Verriegelungsbolzen axial hin- und herverschiebbar ausgebildet ist, um mit dem an der Ladebordwand ausgebildeten Gegenlager in bzw. außer Eingriff zu kommen.

Das in Eingriff bzw. außer Eingriff kommen des Verriegelungsbolzens mit dem in der Ladebordwand ausgebildeten Gegenlager kann an sich auf beliebige geeignete unterschiedliche Art und Weise realisiert werden, beispielsweise elektromotorisch und/oder elektromagnetisch. Vorzugsweise, weil sehr einfach realisierbar, wird jedoch das Verriegelungsmittel druckmittelbeaufschlagt in der Verriegelungsstellung gehalten, wobei das Druckmittel vorteilhafterweise ein hydraulisch und/oder pneumatisch betriebenes Kolben-Zylindersystem ist.

Eine sehr einfache Realisierung des Druckmittels stellt vorteilhafterweise eine Druckfeder dar.

Befindet sich beispielsweise die Ladebordwand in angehobener Stellung auf der Ebene der Ladefläche und steht der stiftartige Verriegelungsbolzen mit dem an der Ladebordwand ausgebildeten Gegenlager in Eingriff, so kann beispielsweise vorteilhafterweise die Ladebordwand manuell aus der Verriegelungsstellung gelöst werden, beispielsweise dadurch, daß der Verriegelungsbolzen mittels einer Handhabe, die mit dem Verriegelungsbolzen mittels eines Drahtseils oder eines Gestänges verbunden ist, aus der Verriegelungsstellung herausgelöst, d.h. in Entriegelungsstellung überführt werden.

Besonders vorteilhaft ist es jedoch, das Ladebordwandsystem derart auszubilden, daß die Ladebordwand aufgrund der Betätigung der Hubaktuatoreinrichtung zum Senken bzw. Einleiten des Senkens der Ladebordwand aus der Verriegelungsstellung lösbar ist. Es findet somit eine Kopplung zwischen der Senkbewegung bzw. der Einleitung der Senkbewegung der Ladebordwand mit dem außer Eingriff kommen des Verriegelungsbolzens mit dem Gegenlager der Ladebordwand statt. Dabei ist es grundsätzlich möglich, wenn die Hubaktuatoreinrichtung hydraulisch, pneumatisch, elektrisch, elektromotorisch oder auf sonstwie geeignete Weise betrieben wird, ebenso auch das außer Eingriff kommen des Verriegelungsbolzens mit dem Gegenlager mit den gleichen Kraftmitteln, von statten gehen zu lassen, wobei es aber auch denkbar ist, unterschiedliche Kraftmittel für die Hubaktuatoreinrichtung einerseits und das außer Eingriff kommen des Verriegelungsbolzens mit dem Gegenlager der Ladebordwand andererseits zu wählen.

Das Gegenlager des Ladebordwandsystems kann ebenfalls auf beliebige geeignete Weise ausgebildet sein, beispielsweise in Form einer oder mehrerer, je nach Anzahl der vorgesehenen Verriegelungsbolzen, an der Ladebordwand vorgesehener Buchsen, in die der Verriegelungsbolzen bzw. die Verriegelungsbolzen eingreift bzw. eingreifen. Aufgrund des nicht auszuschließenden Biegemoments und des zwangsweise bei Belastung der Ladebordwand in vertikaler Verriegelungsstellung auftretenden Drehmoments um die an der Ladebordwand angelenkten Achsen des Hubtragwerks und gegebenenfalls auch des Klapptragwerks, soweit vorhanden, ist es jedoch vorteilhaft, das Gegenlager der Ladebordwand derart auszubilden, daß dort ein Rollenelement bzw. mehrere Rollenelemente vorgesehen ist bzw. sind, unter denen das bzw. die Verriegelungsmittel in Verriegelungsstellung greift bzw. greifen. Eine elastische Verformung der Ladebordwand bei Belastung in Verriegelungsstellung und eine wenn auch geringe Drehung aufrund des Drehmoments um die an der Ladebordwand angelenkten Achsen des Hubtragwerks bzw. gegebenenfalls auch des Klapptragwerks hat somit keine negativen Folgen für den Verriegelungsbolzen, da das Rollenelement bzw. die Rollenelemente sich relativ zur Oberfläche des stiftartigen Verriegelungsbolzens in Abhängigkeit der Belastung auf die Ladebordwand geringfügig drehen können.

Die Erfindung wird nun unter Bezugnahme auf die nachfolgenden schematischen Zeichnungen anhand eines Ausführungsbeispieles eingehend beschrieben. Darin zeigen:
- Fig. 1a. bis 1c.: unterschiedliche Stellungen des Ladebordwandsystems in der Seitenansicht einer vertikal sich nach oben bewegenden Ladebordwand bis zur Verriegelungsstellung auf die Ebene der Ladefläche eines Lastkraftwagens zu,
- Fig. 2a.: ein Ladebordwandsystem wie in den Fig. 1a. bis 1c. dargestellt, jedoch in horizontal verschwenktem Zustand der Ladebordwand unmittelbar vor Erreichen der Verriegelungsstellung,
- Fig. 2b.: eine Darstellung wie Fig. 2a., jedoch bei erreichter Verriegelungsstellung,
- Fig. 3: ein Schaltschema des druckfederbeaufschlagten Verriegelungsbolzens zum außer Eingriff bringen mit dem Gegenlager der Ladebordwand durch pneumatische bzw. hydraulische Steuerung zusammen mit der Steuerung der Hubaktuatoreinrichtung und/oder der Klappaktuatoreinrichtung und
- Fig. 4: eine weitere Art der Ausbildung des Verriegelungsmittels in der Draufsicht in teilweisen Schnitt.

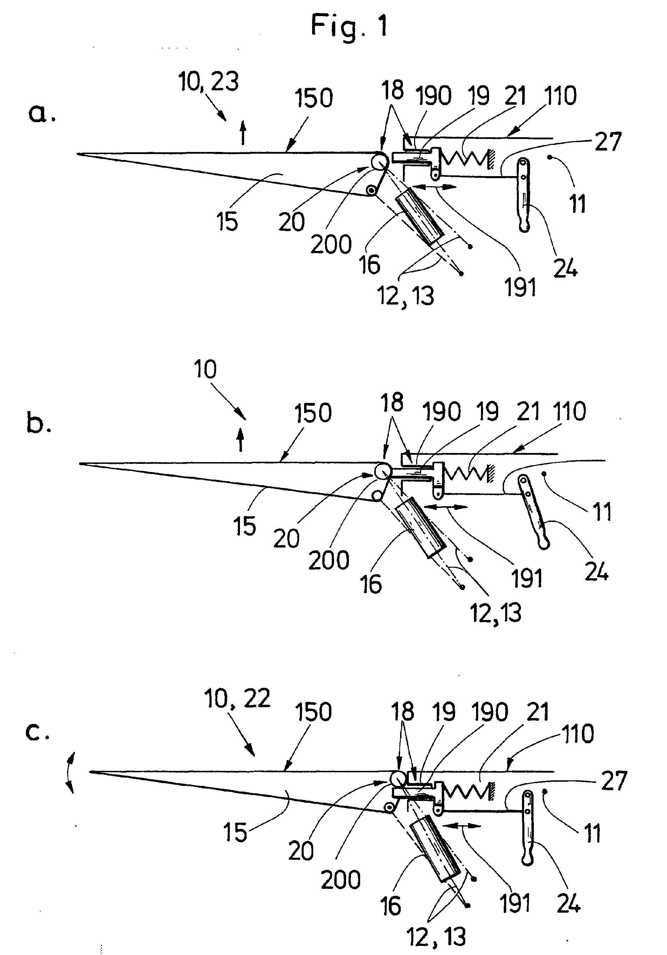

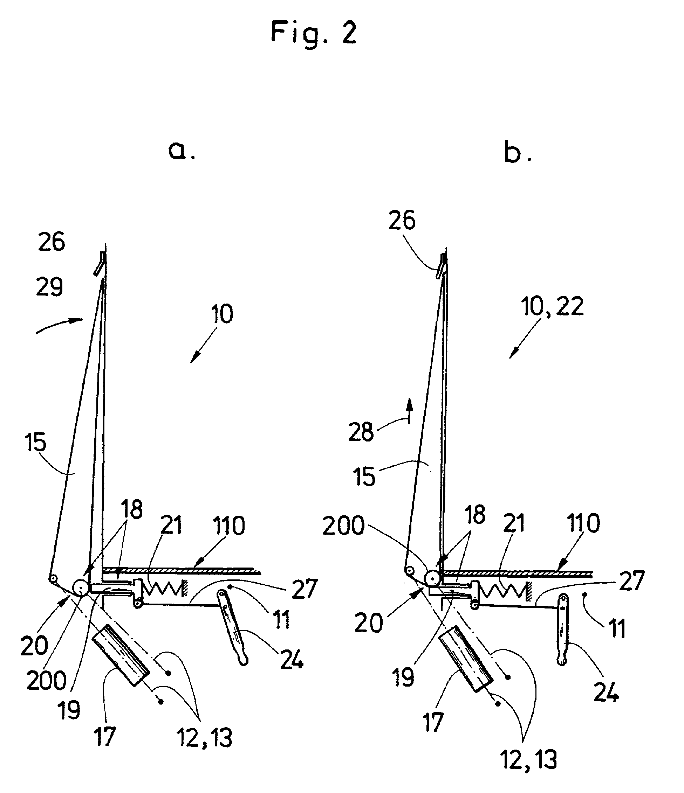

Ladebordwandsysteme 10 zur Befestigung an Fahrzeugen 11, insbesondere Lastkraftfahrzeugen, sind der Fachwelt bekannt. Insofern wird auf den Aufbau derartiger Ladebordwandsysteme 10 nur insoweit noch gesondert Bezug genommen, als daß das für die Beschreibung des hiesigen Ladebordwandsystems 10 erforderlich ist. Grundsätzlich umfaßt das Ladebordwandsystem ein Hubtragwerk 12 und gegebenenfalls ein Klapptragwerk 13, falls eine im wesentlichen plattenförmige Ladebordwand 15 nicht nur von einer abgesenkten Stellung, beispielsweise auf einem Straßenuntergrund (nicht dargestellt), in eine angehobene Stellung und zurück, überführt wird, vergleiche Fig. lc., sondern auch von der Horizontalen in die Vertikale, vergleiche Fig. 2, und umgekehrt von der Vertikalen in die Horizontale zurückgeschwenkt werden soll, vergleiche Fig. 1c..

Die Grundversion des Ladebordwandsystems 10 ist in Fig. 1 dargestellt und auf diese wird zunächst Bezug genommen. In den Figuren ist lediglich ein Hub- bzw. Klapptragwerk 12, 13 dargestellt. Mit dem Hubtragwerk 12 arbeitet eine Hubaktuatoreinrichtung 16 zusammen, die hier als Kolben-Zylindersystem schematisch dargestellt ist, das entweder hydraulisch oder pneumatisch betrieben werden kann. Es ist aber möglich, die Hubaktuatoreinrichtung 16 elektromotorisch betrieben auszubilden. Das Hub- bzw. das Klapptragwerk 12, 13 ist auf an sich bekannte Weise einerseits an der Ladebordwand 15 drehbar angelenkt und andererseits auf bekannte Weise an einer geeigneten Struktur am Fahrzeug 11. Das Hubtragwerk bzw. das Klapptragwerk 12, 13 weisen eine im wesentlichen parallelogrammförmige Struktur auf, wie sie ebenfalls grundsätzlich der Fachwelt bekannt ist, so daß auch darauf ein weiteres Eingehen entbehrlich ist. Pro Ladebordwandsystem 10 ist jedoch wenigstens ein Hubtragwerk 12 ausgebildet und, soweit das Ladebordwandsystem 10 auch zum Klappen der Ladebordwand 15 aus der Horizontalen in die Vertikale und umgekehrt befähigt sein soll, wenigstens ein Klapptragwerk 13.

Am Ladebordwandsystem 10 ist wenigstens ein Verriegelungsmittel 18 vorgesehen, mit dem die Ladebordwand 15 in angehobener Stellung, vergleiche Fig. 1c., lösbar verriegelbar 22 ist. Das Verriegelungsmittel 18 besteht im wesentlichen aus einem stiftartigen Verriegelungsbolzen 19, der in einer Verriegelungsbolzenführungen 190 in Richtung des Pfeiles 191 hin und her bewegbar ist. Das Verriegelungsmittel 18 umfaßt neben dem Verriegelungsbolzen 19 sowie der Verriegelungsbolzenführung 190 auch ein Gegenlager 20, das an der Ladebordwand 15 ausgebildet ist. Bei der in den Figuren dargestellten Ausgestaltung des Ladebordwandsystems 10 wird das Verriegelungsmittel 18 bzw. der stiftartige Verriegelungsbolzen 19 mittels eines in Form einer Druckfeder ausgebildeten Druckmittels lösbar verschiebbar in Verriegelungsstellung 22 gehalten. Es sei darauf hingewiesen, daß das Druckmittel 21 an sich auf beliebige Art und Weise ausgebildet sein kann, d.h. beispielsweise auch in Form einer hydraulisch und/oder pneumatisch betriebenen Kolben-Zylindereinrichtung.

Der Verriegelungsbolzen 19 ist mit einer gegebenenfalls arretierbaren Handhabe 24 über ein Seil oder ein Gestänge 27 verbunden.

In Fig. 1a. ist eine Stellung des Ladebordwandsystems 10 gezeigt, bei der die Ladebordwand 15 sich mit ihrer Oberfläche 150 der Oberfläche der Ladeplattform 110 bzw. der Ladefläche niveaumäßig annähert, wobei der Verriegelungsbolzen sich in Verriegelungsstellung 22 befindet, aus der er aufgrund des Druckmittels 21 in Form einer Druckfeder herausgedrückt werden kann, d.h. auf das Fahrzeug 11 zu. Wird durch weitere Betätigung des Hubtragwerkes 12 über die Hubaktuatoreinrichtung 16 die Ladebordwand 15 weiter angehoben, so kommt der Verriegelungsbolzen 19 in Kontakt mit dem als Rollenelement 200 ausgebildeten Gegenlager 20. Wird die Ladebordwand 15 aufgrund der Betätigung der Hubaktuatoreinrichtung 16 noch weiter angehoben, vergleiche Fig. 1c., kann der Verriegelungsbolzen 19 unter das Rollenelement 200 greifen, so daß die Verriegelungsstellung 22 des Verriegelungsbolzens 19 durch die Federbeaufschlagung in Richtung des Pfeiles 191 unter dem Rollenelement 200 eingenommen wird.

Soll die Ladebordwand 15 wiederum abgesenkt werden, wird zunächst mittels der Handhabe 24 das Verriegelungsmittel 18 in seine Entriegelungsstellung zurückgeführt, so daß der Verriegelungsbolzen 19 außer Eingriff mit dem Rollenelement 20 kommt, wobei nachfolgend durch entsprechende Betätigung der Hubaktuatoreinrichtung 16 die Ladebordwand 15 wiederum abgesenkt werden kann.

Ist das Ladebordwandsystem 10 auch mit einem Klapptragwerk 13 und einer Klappaktuatoreinrichtung 17 versehen, vergleiche die Fig. 2a., b., so kann grundsätzlich in der Stellung der Ladebordwand 15 gemäß Fig. 1 durch entsprechende Betätigung der Klappaktuatoreinrichtung 17 die Ladebordwand 15 von der Horizontalen in die Vertikale geklappt werden, ähnlich der Stellung von Fig. 2b..

Bei einer Mehrzahl von Fahrzeugen 10 ist jedoch geeignet an der Karosserie eines Fahrzeugs 11 eine Klemme 26 vorgesehen, die eine zusätzliche Verriegelung der Ladebordwand 15 in vertikaler Stellung ermöglicht. Unter diese nach unten offene Klemme, bezogen auf die Darstellung der Fig. 2a., b., kann die Ladebordwand 15 durch entsprechende vertikale Bewegung nach oben, vergleiche Pfeil 28 in Fig. 2b., angehoben werden. Um in diesem Zustand gemäß Fig. 2b. die Ladebordwand 15 vor einem selbständigen Verschwenken in die Horizontale zu sichern, wird der Verriegelungsbolzen 19, genau wie im Zusammenhang mit den Fig. 1a., b., c. beschrieben, dann auf gleiche Weise in seine Verriegelungsstellung 22 überführt, nachdem zuvor gemäß Fig. 2a. der Verriegelungsbolzen 19 zunächst am auch für diesen Fall als Rollenelement 200 ausgebildeten Gegenlager 20 anliegt und bei weiterer Bewegung des Klapptragwerks 13 mittels der Klappaktuatoreinrichtung 17 in Richtung des Pfeiles 191 in seine Verriegelungsstellung gelangt.

Auch hier ist eine Entriegelung mittels der gegebenenfalls arretierbaren Handhabe 24 über das Seil bzw. Gestänge 27 möglich. Danach kann dann durch umgekehrte Betätigung der Klappaktuatoreinrichtung 17 zunächst ein geringfügiges Absenken der Ladebordwand 15 entgegen der Richtung des Pfeiles 28 eingeleitet werden, so daß die Ladebordwand 15 mit ihrer Spitze außer Eingriff mit der Klemme 26 kommt, so daß nachfolgend, entgegen der Richtung des Pfeiles 29, die Klappbewegung aus der Vertikalen in die Horizontale eingeleitet werden kann.

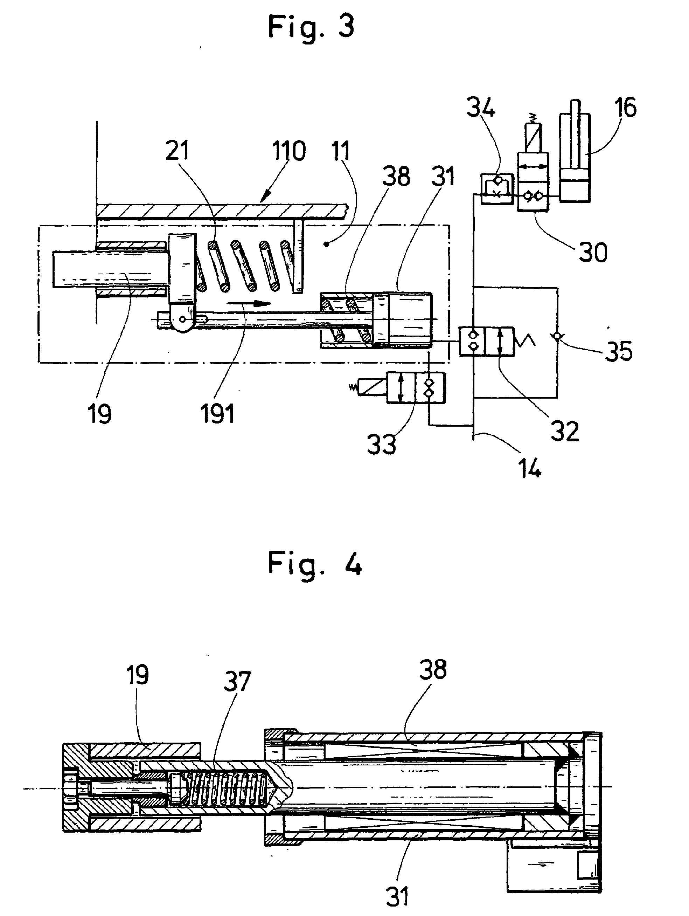

Fig. 3 stellt ein Ausführungsbeispiel für eine Einrichtung bzw. ein Schaltschema zum Außereingriffbringen des druckmittelbeaufschlagten Verriegelungsbolzens 19 aus dem Gegenlager 20 der Ladebordwand 15 dar. Bei Ladebordwandsystemen 10 wird generell für die Ausführung der Hubbewegung mittels der Hubaktuatoreinrichtung 16, z.B. wenn sie hydraulisch oder pneumatisch betrieben wird, ein Druck auf ein flüssiges oder gasförmiges Medium erzeugt, so daß die Hubaktuatoreinrichtung 16 ihrer bestimmungsgemäßen Funktion nachkommen kann, nämlich die Ladebordwand 15 von einer abgesenkten Stellung, beispielsweise von einem Straßenuntergrund aus, auf die Höhe der Ladeplattform bzw. Ladefläche 110 anzuheben. Das unter Druck befindliche Mediem zur Betätigung der Hubaktuatoreinrichtung 16 wird beispielsweise über eine Leitung 14, die hier beispielsweise eine Hydraulikmittelleitung ist, der Hubaktuatoreinrichtung 16 zugeführt.

Ein Magnetventil 30 ist so gestaltet und gesteuert, daß das Mediem in die Hubaktuatoreinrichtung 16 gelangen kann und die Bewegung der Ladebordwand 15 in Richtung der Ladeplattform/Ladefläche 110 des Fahrzeugs 11 eingeleitet wird. Die Hubgeschwindigkeit wird durch die Menge des Mediums bestimmt, die pro Zeit über die Leitung 14 zur Hubaktuatoreinrichtung 16 gefördert wird.

Bei einem Ladebordwandsystem 10 gemäß der Erfindung mit einer Verriegelbarkeit der Ladebordwand 15 in angehobener Stellung ist ein Magnetventil 33 vorgesehen, das parallel zum Magnetventil 30 angeordnet ist. Dadurch wird sichergestellt, daß ein Zylinder eines weiteren Kolben-Zylindersystems 31 bei jeder Einleitung einer Hubbewegung der Hubaktuatoreinrichtung 16 bzw. der Ladebordwand 15 mit dem Medium gefüllt wird (Hydraulikmedium oder Pneumatikmedium) und der Verriegelungsbolzen 19 in Verriegelungsposition geht.

Bei einem Ladebordwandsystem 10 ist die Leitung 14 für das Druckmedium normalerweise direkt mit einem Vorrat für das Druckmedium verbunden (nicht dargestellt). In angehobener Stellung der Ladebordwand 15 steht die Hubaktuatoreinrichtung 16 unter dem Druck des Mediums. Die Ladebordwand 15 übt durch das Eigengewicht und gegebenenfalls einer Last, die auf der Ladebordwand 15 abgestellt wird, einen Gegendruck aus. Der Druck des Mediums in der Hubaktuatoreinrichtung 16 ist so groß gewählt, daß der gewichtsbedingte Druck der Ladebordwand 15 und der Druck, den eine Last auf die Ladebordwand 15 ausübt, nicht zu einer unkontrollierten Absenkung der Ladebordwand 15 führt. Wenn die Absenkung der Ladebordwand 15 wunschgemäß eingeleitet wird, d.h., daß eine Steuerung derart erfolgt, daß das Medium aus der Hubaktuatoreinrichtung 16 entweichen kann, wird die Senkgeschwindigkeit der Ladebordwand 15 durch einen geeignet eingestellten Mengenregler 34, der in Reihe mit dem Magnetventil 13 geschaltet ist, begrenzt. Bei dem erfindungsgemäßen Ladebordwandsystem 10 mit Verriegelung der Ladeplattform 15 in angehobener Stellung werden die Magnetventile 30 und 33 parallel angesteuert. Das Ventil 32, das in Reihe mit dem Magnetventil 13 und dem Mengenregler 34 geschaltet ist, öffnet erst, wenn der Zylinder des Kolben-Zylindersystems 31 drucklos ist. Dadurch wird sichergestellt, daß die Senkbewegung der Ladebordwand 15 erst eingeleitet wird, wenn der Verriegelungsbolzen 19 sich in zurückgezogener Stellung befindet, d.h. außer Eingriff mit der Ladebordwand 15 gekommen ist.

Die im Zusammenhang mit Fig. 3 beschriebene Ausgestaltung des Ladebordwandsystems 10 kann grundsätzlich bei schon an Fahrzeugen vorhandenen Ladebordwandsystemen 10 nachgerüstet werden, die bisher keine Verriegelung der Ladebordwand 15 in angehobener Stellung ermöglichten. Der sehr große Vorteil der Ausgestaltung von Fig. 3 ist der, daß auch bei einer Nachrüstung in die normale Steuerung der Ladebordwand 15 bzw. des Ladebordwandsystems 10 schlechthin nicht eingegriffen zu werden braucht.

Fig. 4 zeigt eine Modifikation des Verriegelungsmittels 18 gemäß Fig. 3, wobei die strichpunktierte Linie gemäß Fig. 3 die Elemente von Fig. 3 zeigt, die bei der Ausgestaltung von Fig. 4 zu einer Verriegelungsmitteleinheit zusammengefaßt sind. Der Verriegelungsbolzen 19 ist hier direkt auf einer Kolbenstange 36 des Kolben-Zylindersystems 31 gelagert bzw. aufgenommen. Das Druckmittel bzw. die Feder 37, vergleichbar in der Funktion mit der Feder 21 gemäß der Ausgestaltung von Fig. 3, ist in die Kolbenstange 36 integriert. Die Entriegelungsfeder 38, hier ausgeformt als Druckfeder, ist direkt im Zylinder 31 angeordnet.

### Bezugszeichenliste

- 10: Ladebordwandsystem
- 11: Fahrzeug
- 110: Ladeplattform/Ladefläche
- 12: Hubtragwerk
- 13: Klapptragwerk
- 14: Hydraulikmittelleitung
- 15: Ladebordwand
- 150: Oberfläche
- 16: Hubaktuatoreinrichtung
- 17: Klappaktuatoreinrichtung
- 18: Verriegelungsmittel
- 19: Verriegelungsbolzen
- 190: Verriegelungsbolzenführung
- 191: Pfeil
- 20: Gegenlager
- 200: Rollenelement
- 21: Druckmittel
- 22: Verriegelungsstellung (verriegelbar)
- 23: Entriegelungsstellung (entriegelbar/lösbar)
- 24 25: Handhabe
- 26: Klemme
- 27: Seil/Gestänge
- 28: Pfeil
- 29: Pfeil
- 30: Magnetventil
- 31: Kolben-Zylindersystem
- 32: Ventil
- 33: Magnetventil
- 34: Mengenregler
- 35: Rückschlagventil
- 36: Kolbenstange (Entriegelungszylinder)
- 37: Verriegelungsfeder
- 38: Entriegelungsfeder

## Patentansprüche

1. Ladebordwandsystem zur Befestigung an Fahrzeugen, insbesondere Lastkraftfahrzeugen, umfassend ein Hubtragwerk, eine im wesentlichen plattenförmige Ladebordwand zum Heben und Absenken einer Last und wenigstens eine Hubaktuatoreinrichtung zum Heben und Senken der Ladebordwand, dadurch gekennzeichnet, daß die Ladebordwand (15) in angehobener Stellung lösbar verriegelbar (22) ist.

2. Ladebordwandsystem nach Anspruch 1, dadurch gekennzeichnet, daß ein Klapptragwerk (13) sowie wenigstens eine Klappaktuatoreinrichtung (17) zum Verschwenken der Ladebordwand (15) von der Horizontalen in die Vertikale und umgekehrt vorgesehen ist, wobei die Ladebordwand (15) in vertikaler Stellung lösbar verriegelbar ist.

3. Ladebordwandsystem nach einem oder beiden der Ansprüche 1 oder 2, dadurch gekennzeichnet, daß wenigstens ein Verriegelungsmittel (18) vorgesehen ist.

4. Ladebordwandsystem nach Anspruch 3, dadurch gekennzeichnet, daß das Verriegelungsmittel (18) einen am Fahrzeug (11) befestigten stiftartigen Verriegelungsbolzen (19) umfaßt, der im angehobenen und/oder vertikal verschwenkten Zustand der Ladebordwand (15) mit einem an der Ladebordwand (15) ausgebildeten Gegenlager (20) in bzw. außer Eingriff kommt.

5. Ladebordwandsystem nach einem oder beiden der Ansprüche 3 oder 4, dadurch gekennzeichnet, daß das Verriegelungsmittel (18) druckmittelbeaufschlagt (21) in Verriegelungsstellung (22) haltbar ist.

6. Ladebordwandsystem nach Anspruch 5, dadurch gekennzeichnet, daß das Druckmittel (21) ein hydraulisch und/oder pneumatisch betriebenes Kolben-Zylindersystem ist.

7. Ladebordwandsystem nach Anspruch 5, dadurch gekennzeichnet, daß das Druckmittel (21) eine Druckfeder ist.

8. Ladebordwandsystem nach einem oder mehreren der Ansprüche 1 bis 7, dadurch gekennzeichnet, daß die Ladebordwand (15) manuell aus der Verriegelungsstellung (22) lösbar ist.

9. Ladebordwandsystem nach einem oder mehreren der Ansprüche 1 bis 8, dadurch gekennzeichnet, daß die Ladebordwand (15) aufgrund der Betätigung der Hubaktuatoreinrichtung (16) zum Senken der Ladebordwand (15) aus der Verriegelungsstellung (22) lösbar ist.

10. Ladebordwandsystem nach einem oder mehreren der Ansprüche 1 bis 9, dadurch gekennzeichnet, daß die Ladebordwand (15) aufgrund der Betätigung der Klappaktuatoreinrichtung (17) zum Verschwenken der Ladebordwand (15) aus der Verriegelungsstellung (22) lösbar ist.

11. Ladebordwandsystem nach einem oder mehreren der Ansprüche 4 bis 10, dadurch gekennzeichnet, daß das Gegenlager (20) der Ladebordwand (15) ein Rollenelement (200) ist, unter das das Verriegelungsmittel (18) in Verriegelungsstellung (22) greift.
